(19) Europäisches Patentamt
European Patent Office
Office européen des brevets

(11) **EP 2 190 113 A1**

(12) **EUROPEAN PATENT APPLICATION**

(43) Date of publication:
26.05.2010 Bulletin 2010/21

(51) Int Cl.:
*H02P 23/00* (2006.01)        *H02P 21/10* (2006.01)
*H02P 21/12* (2006.01)

(21) Application number: 08169416.8

(22) Date of filing: 19.11.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(71) Applicant: ABB Research Ltd.
8050 Zürich (CH)

(72) Inventor: Kieferndorf, Frederick
CH-5442, Fislisbach (CH)

(74) Representative: ABB Patent Attorneys
C/o ABB Schweiz AG
Intellectual Property (CH-LC/IP)
Brown Boveri Strasse 6
5400 Baden (CH)

(54) **Method and apparatus for controlling an electrical Machine with direct torque control**

(57) The invention relates to a direct torque control unit and method for an electrical machine (2) comprising:
- a difference means for providing a difference torque signal depending on a desired torque and an actual torque of the electrical machine (2);
- a modulation unit (15) for providing a torque modulation signal which is applied such that the torque difference signal is overlaid by the torque modulation signal to obtain a modified torque difference signal;
- a hysteresis unit (14) for applying one of a plurality of predetermined torque output levels based on a change of the modified difference torque input; and
- a processing unit (4) for providing space vector control signals ($Z_a$, $Z_b$, $Z_c$) for controlling a converter unit (3) of the electrical machine (2) depending on the applied torque output level.

Fig. 1

EP 2 190 113 A1

**Description**

**Technical field**

The present invention is related to electrical machines, in particular to the controlling of electrical machines with direct torque control.

**Prior art**

Direct torque control (DTC) is a high performance torque control technique for electrical machines, e.g. motors, which features optimal torque response at low rotor speed as well as in the flux weakening region. Direct torque control is based on a direct selection of voltage space vectors depending on the input differences of torque and magnetic flux. The torque and the flux input differences are first applied to respective hysteresis comparator units. Depending on the result of the hysteresis-processing, torque and flux logic values are set and used to selecting one of several voltage space vectors from a switching table. Thereby, torque is controlled by the amplitude and angle of the stator flux vector with respect to the rotor flux vector. In a three-phase, two-level converter a hexagon of six active voltage vectors is available by which change of the stator flux can be induced. In a three-phase, three -level converter a hexagon of eighteen active voltage vectors is available by which change of the stator flux can be induced.

The output of the hysteresis units is a classification of the torque input difference and the flux input difference by two, three or more different error limit bands. Predetermined output levels associated with the difference bands are then applied to the switching table. Depending thereon, a selection is made from the switching table of the respective voltage vectors to be applied to a power electronics converter unit of the electrical machine.

One issue in the operation of direct torque control drives is that at desired zero speed of the electrical machine with a light load the rotor of the electrical machine can move noticeably.

**Description of the invention**

It is therefore an object of the present invention to provide a method and an apparatus for performing a direct torque control of an electrical machine wherein the behavior of the electrical machine at desired zero speed with light load is improved when operating in a direct torque control mode.

This object is achieved by a method for operating a direct torque controlled electrical machine according to claim 1 and by the direct torque control of an electrical machine, a motor control unit and a drive system according to the further independent claims.

Further embodiments of the present invention are described in the dependent claims.

According to a first aspect a direct torque control unit for an electrical machine is provided comprising:

- a difference means for providing a difference torque signal depending on a desired torque and an actual torque of the electrical machine;
- a modulation unit for providing a torque modulation signal which is applied such that the torque difference signal is overlaid by the torque modulation signal to obtain an modified torque difference signal;
- a hysteresis unit for applying one of a plurality of predetermined torque output levels based on a change of the modified difference torque input; and
- a processing unit for providing control signals for controlling a converter unit of the electrical machine depending on the applied torque output level.

One idea of the present invention is to avoid this undesired motor behavior of moving at a desired zero speed by maintaining a minimum switching frequency of the switching of the space vectors. This is accomplished by applying a torque modulation signal to the input of the hysteresis unit such that a switching is enforced even when the torque input difference by itself would not cause a switching of the hysteresis unit. The torque modulation signal then results in the generation of different space vectors by the switching table.

Moreover, the difference torque signal may be determined by a subtraction unit as a signal depending on the difference between the desired torque and the actual torque, wherein a summing unit is provided to add the torque modulation signal to the difference torque signal output by the subtraction unit.

Additionally or alternatively, the modified difference torque signal may be determined by a subtraction unit as the difference between the desired torque and the actual torque, wherein a summing unit is provided to add the torque modulation signal to a signal representing one of the desired torque and the actual torque before being applied to the subtraction unit.

According to a further embodiment the modulation unit may be adapted to provide a periodic torque modulation signal which has an effective value of zero. Thereby, the effective torque output is not affected by the modulation signal.

The modulation unit may be further adapted to provide a periodic torque modulation signal which has a triangular waveform, a sawtooth waveform, a sinus waveform, a rectangular waveform or a combination thereof.

According to a further embodiment, the hysteresis unit may have at least three different hysteresis threshold levels, wherein the modulation unit is adapted to provide the torque modulation signal as a periodic signal with a peak value which is more than an absolute value of the smallest positive or of the largest negative hysteresis threshold.

The hysteresis unit may further have at least two positive or at least two negative hysteresis threshold levels, wherein the peak value of the torque modulation signal is greater than the absolute value of the smallest positive of the at least two positive hysteresis threshold levels and/or the absolute value of the largest negative of the at least two negative hysteresis threshold levels, and

wherein the peak value of the torque modulation signal is less than the absolute value of the second smallest positive of the at least two positive hysteresis threshold levels and/or the absolute value of the second largest negative of the at least two negative hysteresis threshold levels.

According to a further embodiment, the modulator unit may be adapted to only apply the torque modulation signal when the absolute value of the speed of the electrical machine is below an absolute value of a predetermined speed threshold.

According to a further embodiment, the modulator unit may be adapted to only apply the torque modulation signal when the absolute value of the reference torque is below a torque reference threshold.

Moreover, the modulator unit may be adapted to only apply the torque modulation signal when the absolute value of the difference between the actual torque and the desired torque is less than a difference torque threshold.

In particular, the hysteresis unit may have at least two positive or at least two negative hysteresis threshold levels, wherein the sum of the peak value of the torque modulation signal ($T_M$) and the difference torque threshold is less than the absolute value of the second smallest of the at least two positive or the at least two negative hysteresis threshold levels, respectively.

Furthermore, the modulator unit may be adapted to vary the frequency of the torque modulation signal in response to the speed. In particular, the modulator unit may be adapted to increase the frequency of the torque modulation signal as the speed decreases.

According to another aspect, a motor control unit is provided comprising the above direct torque control unit and a converter unit which is adapted to drive an electrical machine, wherein the processing unit is adapted to provide voltage space vectors to the converter unit.

According to another aspect a drive system is provided comprising the above motor control unit and an electrical machine.

Furthermore, the modulation unit may be adapted to provide the periodic torque modulation signal with a modulation frequency which is higher than a cut-off frequency of the electrical machine regarding the applied space vectors.

It may be provided that the modulator unit is adapted to only apply the torque modulation signal when the speed is below a speed threshold and the load of the electrical machine is below a torque threshold. Moreover, the modulator unit may be adapted to vary the frequency of the torque modulation signal in response to the speed. In particular, the modulator unit may be adapted to increase the frequency of the torque modulation signal as the speed decreases.

According to another aspect a direct torque control method is provided for controlling an electrical machine, comprising the steps of:

- providing a difference torque signal depending on a desired torque and an actual torque of the electrical machine;
- providing a torque modulation signal which is applied such that the torque difference signal is overlaid by the torque modulation signal to obtain a modified torque difference signal;
- applying one of a plurality of predetermined torque output levels based on a change of the modified torque difference signal input; and
- providing control signals corresponding to space vectors for controlling a converter unit of the electrical machine depending on the applied torque output level.

**Brief description of the drawings**

Embodiments of the invention are described in conjunction with the accompanying drawings in which:

Fig. 1 schematically shows a block diagram of a direct torque control motor; and

Fig. 2 schematically illustrates a detailed modulation unit for use in the direct torque control motor of Fig. 1.

**Ways to implement the invention**

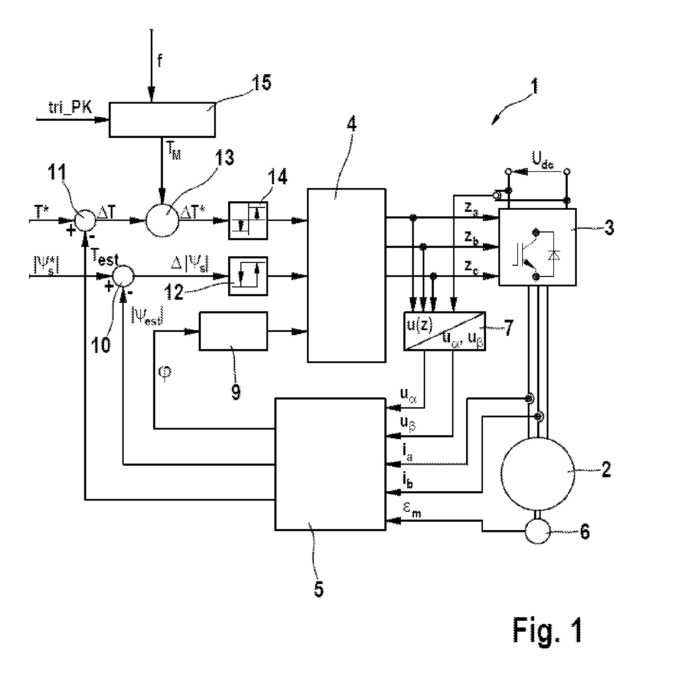

Fig. 1 schematically illustrates a drive system 1 including a motor 2 as an electrical machine which is powered by a power electronics converter unit 3. The motor 2 can be a synchronous machine, such as a multi-phase permanent magnet excited or field winding excited synchronous machine and the like. The motor 2 can in addition be an asynchronous machine, such as a multi-phase induction machine and the like. All electrical machines have in common a stator which is provided with phase windings.

The converter unit 3 may be a common inverter unit including power electronic switches like IGCT's or IGBT's, and the like. Converter unit 3 can include a three-phase two, three or more level inverter alternatively, multiple H-bridges, one per phase can be used and so on. The converter unit 3 applies phase voltages to the motor 2 according to a selected space vector. The space vector is provided by a processing unit 4 (calculating unit) as control signals (switching signals) $Z_a$, $Z_b$, $Z_c$ (one signal for each phase) so that the converter unit 3 applies the corresponding phase voltages to the phases of the motor 2. In the present case of the three-phase two level converter unit 3 at least six voltage space vectors are available in the processing unit 4 having a phase angle of 60° to each other.

A flux and torque estimation unit 5 is provided which receives the $\alpha$, $\beta$ values of the voltages applied to the motor 2 as well as at least two phase currents $i_a$, $i_b$ (in general, n-1 phase currents in case of an n-phase motor). In the present case of a permanent magnet excited synchronous machine the position $\varepsilon_M$ of the rotor of the motor 2 is also supplied which may be e.g. provided by a position sensor 6. The $\alpha$, $\beta$- values $U_\alpha$, $U_\beta$ of the applied voltage are provided by a voltage vector transformation unit 7 which receives the control signals $Z_a$, $Z_b$, $Z_c$ and the supply voltage $U_{DC}$ applied to the converter unit 3. The $\alpha$, $\beta$ voltage vector $U_\alpha$, $U_\beta$ are used to calculate the flux $\psi$ in the flux and torque estimation unit 5. The estimation of the torque T and flux $\psi$ based on the above measured and calculated quantities is performed in a known manner e.g. using the following formulas describing the motor model:

$$T = \frac{3}{2} \cdot p \cdot \left( \psi_p \cdot i_q + \left( L_d - L_q \right) \cdot i_d \cdot i_q \right)$$

$$\psi = \sqrt{\left( \psi_p + L_d i_d \right)^2 + \left( L_q i_q \right)^2}$$

wherein p is the number of pole pairs of the permanent magnet, $L_d$, Lq are the d- and q-components of the stator inductivity, respectively, $i_d$, $i_q$ are the currents in a d,q - coordinate system and $\psi_P$ the main flux of the permanent magnet.

The flux and torque estimation unit 5 provides a phase angle $\varphi$ which is determined based on the detected position $\varepsilon_M$ of the rotor. The phase angle $\varphi$ is supplied to a sector determination unit 9 which provides a sector information to a processing unit 4.

As a result an estimated magnetic flux $\psi_{est}$ and an estimated torque $T_{est}$ as well as a phase angle $\varphi$ of the magnetic flux is provided. The estimated magnetic flux $\psi_{est}$ is provided to a first subtraction unit 10 to which also a reference magnetic flux $\psi_s$ is provided for example by a flux control unit (not shown). The result of the first subtraction unit 10 is a magnetic flux difference $\Delta\psi_s$ which is provided to a first hysteresis unit 12. The flux hysteresis unit 12 includes a two-level hysteresis comparator, i.e. which switches to a first output value when the magnetic flux difference $\Delta\psi_s$ exceeds a higher flux threshold level and switches to a second output value when the magnetic flux difference $\Delta\psi_s$ goes below a lower flux threshold level. In other words, the flux hysteresis unit 12 constantly outputs an output value until a crossing of one of the hysteresis levels causes a switching to another output value. The output of the flux hysteresis unit 12 is provided to the processing unit 4. In general, the flux hysteresis unit 12 may include a hysteresis comparator having more than two hysteresis levels.

Furthermore, the estimated torque $T_{est}$ is provided to a second subtraction unit 11 to which also a reference torque $T^*$ is provided e.g. from the speed control unit (not shown). The result of the second subtraction unit 11 is a difference torque $\Delta T$ which is provided to a summing unit 13. In the summing unit 13 a periodic torque modulation signal $T_M$ is added to the difference torque $\Delta T$. The result is a modified difference torque $\Delta T^*$ which is provided to a torque hysteresis unit 14. The torque hysteresis unit 14 includes in the present system a three-level hysteresis comparator which provides three hysteresis levels such that a three-level output is provided to the processing unit 4. A multiple-level hysteresis comparator works in a known manner, i.e. a switching of the respective torque output value is performed depending on which threshold level is crossed by the modified difference torque $\Delta T^*$. Instead of a three-level hysteresis comparator the hysteresis comparator can comprise more than three levels, e.g. four and more levels.

The processing unit 4 is generally implemented as lookup-table which associates input values, as modified difference torque $\Delta T^*$ and magnetic flux difference $\Delta\psi_s$ with control signals $Z_a$, $Z_b$, $Z_c$ representing the space vector to be applied to control the converter unit 3.

The torque modulation signal $T_M$ is provided by a modulator 15. The modulator 15 and the summing unit 13 work to overlay the torque modulation signal to the torque difference $\Delta T$ to ensure switching of the processing unit 4 with the minimum frequency of the torque modulation signal, i.e. repeated changes of the control signals $Z_a$, $Z_b$, $Z_c$ provided by the processing unit 4. The repeated changes of the processing unit 4 are achieved by causing the torque hysteresis unit 14 to change the output level to be applied to the processing unit 4 caused by the torque modulation signal $T_M$. For this reason the torque modulation signal $T_M$ provided by the modulator 15 can be any waveform with a modulation frequency and peak value such as a sawtooth waveform or a sinusoidal waveform etc. The modulation frequency of the torque modulation signal $T_M$ should be more than a limitation frequency of the mechanical system, i.e. a frequency at which the motor 2 can follow a change in torque. Furthermore, the modulation frequency f should be lower than a limit frequency of the system, i.e. the switching frequency of the converter unit 3 and the processing unit 4.

The peak value $T_{M\_PK}$ of the torque modulation signal $T_M$ is chosen so that it allows that the modified difference torque $\Delta T^*$ exceeds or goes below first hysteresis levels ht1, -ht1 (hysteresis levels with the smallest absolute values different from 0). Thereby, a switching of the torque hysteresis unit 14 is enforced since the respective hysteresis level ht1, -ht1 are crossed resulting in a change of the torque output value. For example, the peak value $T_{M\_PK}$ of the torque modulation signal $T_M$ can be chosen as $6/5 \cdot$ ht1. Analogously, a negative peak value of the torque modulation signal $T_M$ may be chosen as $-6/5 \cdot$ ht1.

Furthermore, the peak value $T_{M\_PK}$ should not exceed a value which causes a switching of the processing unit 4 with space vector control signals $Z_a$, $Z_b$, $Z_c$ located not within the inner hexagon of the available space vectors. This might happen if the torque hysteresis unit 14 has a hysteresis comparator with more than three levels, i.e. a further hysteresis threshold level of ht1 + ht2 exists. In this case, the peak value $T_{M\_PK}$ should not be selected such that the sum of the first threshold ht1 and the peak value $T_{M\_PK}$ is more than an upper threshold level ht1 + ht2.

The average value of the torque modulation waveform may be zero so as not to affect the average torque output.

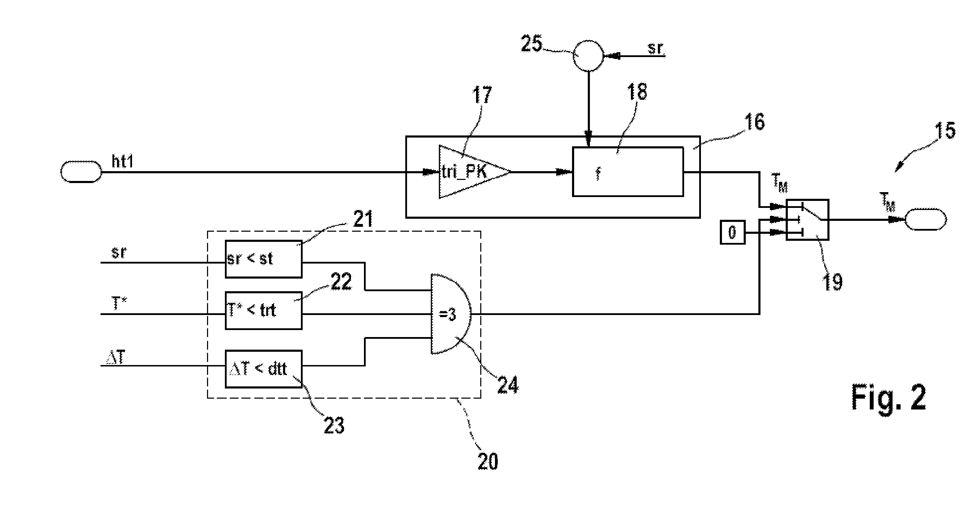

In Fig. 2 a block diagram of the modulation unit 15 is shown. The modulation unit 15 has a modulation signal generator 16 which has a multiplication unit 17 and a waveform generation unit 18 wherein the absolute value of the smallest output level of the torque hysteresis unit 14 is multiplied by a modulation factor tri_PK (in the present case tri_PK = 6/5). The modulation factor tri_PK is provided to the waveform generator 18 which provides the torque modulation signal $T_M$ at a modulation frequency f between an upper peak value $T_{M\_PK}$ which is a multiplication result of +tri_PK $\cdot$ ht1 and a lower peak value which is a multiplication result -tri_PK $\cdot$ ht1. Different upper and lower peak values can be provided, however, the waveform has to be adapted to ensure that the average value of the torque modulation signal $T_M$ is zero.

The output of the modulation signal generator 16 is provided to a first input of a selection unit 19 wherein a second input of the selection unit 19 is provided with an input value of 0. The selection unit 19 is controlled by a control signal supplied by a control unit 20.

The control unit 20 is operated so that the torque modulation signal $T_M$ is provided as output of the modulation unit 15 only in case several conditions are met. The conditions are:

- The speed sr of the rotor of the motor 2 has to be below a predetermined speed threshold st. This check is performed in a first comparator block 21.
- The reference torque input T*, e.g. provided by a speed control unit (not shown) has to be below a torque reference threshold trt. This check is performed in a second comparator block 22.
- Difference torque as the difference between the torque reference input T* and the estimated torque $T_{est}$ has to be below a difference torque threshold dtt to provide the waveform generator output as the output of the modulator. This check is performed in a third comparator block 23.

Only in case all three conditions are met, which is determined in an AND block 24 the torque modulation signal $T_M$ is selected to be output by the control unit 20.

The frequency for applying to the waveform generation unit 18 may be generated in a frequency generator 25. The frequency generator 25 may provide a fixed modulation frequency f. An alternative method is to make the modulation frequency f of the modulation signal $T_M$ variable depending on the speed of the rotor. In this case, the modulation frequency f may be increased as the speed decreases. The increase of the frequency starting at the predetermined speed threshold st with a modulation frequency of f = 0 and reaching a predetermined maximum modulation frequency f= $f_{PK}$ at a second predetermined lower speed threshold st1. The maximum modulation frequency $f_{PK}$ is selected to be more than a limitation frequency of the mechanical system and/or lower than a limit frequency of the system as described above. The increase of the modulation frequency in response to decreasing speed can be linear or can follow any other monotonous function. Between the second speed threshold st1 and zero speed the modulation signal with the predetermined maximum modulation frequency $f_{PK}$ is applied. The peak value of the signal could be the same as the previous example $T_{M\_PK}$. This way the transition from pure DTC to the modulated DTC will be smooth.

Instead of arranging the summing unit 13 to injecting the torque modulation signal $T_M$ to the difference torque $\Delta T$, the summing unit 13 can be provided upstream the second subtraction unit 11 either in the signal path for the reference torque $T^*$ or in the signal path for the estimated torque $T_{est}$. Thereby, the same effect to the input signal of the torque hysteresis unit 14, i.e. the same modified torque difference is obtained.

**Reference list**

| 1 | Drive system |
|---|---|
| 2 | Motor |
| 3 | Power electronics converter unit |
| 4 | Processing unit |
| 5 | Flux and torque estimation unit |
| 6 | Position sensor |
| 7 | Voltage vector transformation unit |
| 9 | Sector determination unit |
| 10 | First subtraction unit |
| 11 | Second subtraction unit |
| 12 | Flux hysteresis unit |
| 13 | Summing unit |
| 14 | Torque hysteresis unit |
| 15 | Modulation unit |
| 16 | modulation signal generator |
| 17 | Multiplication unit |
| 18 | Waveform generation unit |
| 19 | Selection unit |
| 20 | Control unit |
| 21 | First comparator unit |
| 22 | Second comparator unit |
| 23 | Third comparator unit |
| 24 | AND-block |
| 25 | Frequency generator |

**Claims**

1. Direct torque control unit for an electrical machine (2) comprising:

   - a difference means (13) for providing a difference torque signal depending on a desired torque and an actual torque of the electrical machine (2);
   - a modulation unit (15) for providing a torque modulation signal ($T_M$) which is applied such that the torque difference signal ($\Delta T$) is overlaid by the torque modulation signal ($T_M$) to obtain a modified torque difference signal;
   - a hysteresis unit (14) for applying one of a plurality of predetermined torque output levels based on a change of the modified difference torque input ($\Delta T^*$); and
   - a processing unit (4) for providing control signals ($Z_a$, $Z_b$, $Z_c$) for controlling a converter unit (3) of the electrical machine (2) depending on the applied torque output level.

2. Direct torque control unit according to claim 1, wherein the difference torque signal ($\Delta T$) is determined by a subtraction unit (11) as a signal depending on the difference between the desired torque ($T^*$) and the actual torque ($T_{est}$), wherein a summing unit (13) is provided to add the torque modulation signal ($T_M$) to the difference torque signal ($\Delta T$) output by the subtraction unit (11).

3. Direct torque control unit according to claim 1, wherein the modified difference torque signal is determined by a subtraction unit as the difference between the desired torque ($T^*$) and the actual torque ($T_{est}$), wherein a summing

unit is provided to add the torque modulation signal to a signal representing one of the desired torque and the actual torque ($T_{est}$) before being applied to the subtraction unit (11).

4. Direct torque control unit according to one of the claims 1 to 3, wherein the modulation unit (15) is adapted to provide a periodic torque modulation signal ($T_M$) which has an effective value of zero.

5. Direct torque control unit according to one of the claims 1 to 4, wherein the modulation unit (15) is adapted to provide a periodic torque modulation signal ($T_M$) which has a triangular waveform, a sawtooth waveform, a sinus waveform, a rectangular waveform or a combination thereof.

6. Direct torque control unit according to one of the claims 1 to 5, wherein the hysteresis unit (14) has at least three different hysteresis threshold levels, wherein the modulation unit (15) is adapted to provide the torque modulation signal ($T_M$) as a periodic signal with a peak value which is more than an absolute value of the smallest positive and/or than an absolute value of the largest negative hysteresis threshold.

7. Direct torque control unit according to claim 6, wherein the hysteresis unit (14) has at least two positive or at least two negative hysteresis threshold levels,
wherein the peak value of the torque modulation signal ($T_M$) is greater than the absolute value of the smallest positive of the at least two positive hysteresis threshold levels and/or the absolute value of the largest negative of the at least two negative hysteresis threshold levels, and
wherein the peak value of the torque modulation signal ($T_M$) is less than the absolute value of the second smallest positive of the at least two positive hysteresis threshold levels and/or the absolute value of the second largest negative of the at least two negative hysteresis threshold levels.

8. Direct torque control unit according to one of the claims 1 to 7, wherein the modulator unit (15) is adapted to only apply the torque modulation signal ($T_M$) when the absolute value of the speed of the rotor of the electrical machine (2) is below a predetermined speed threshold (st).

9. Direct torque control unit according to one of the claims 1 to 8, wherein the modulator unit (15) is adapted to only apply the torque modulation signal ($T_M$) when the absolute value of the reference torque ($T^*$) is below a torque reference threshold (trt).

10. Direct torque control unit according to one of the claims 1 to 9, wherein the modulator unit (15) is adapted to only apply the torque modulation signal ($T_M$) when the absolute value of the difference between the actual torque and the desired torque is less than a difference torque threshold.

11. Direct torque control unit according to claim 10, wherein the hysteresis unit (14) has at least two positive or at least two negative hysteresis threshold levels, wherein the sum of the peak value of the torque modulation signal ($T_M$) and the difference torque threshold is less than the absolute value of the second smallest of the at least two positive or the at least two negative hysteresis threshold levels, respectively.

12. Direct torque control unit according to one of the claims 1 to 11, wherein the modulator unit (15) is adapted to vary the frequency of the torque modulation signal ($T_M$) in response to the speed.

13. Direct torque control unit according to claim 12, wherein the modulator unit (15) is adapted to increase the frequency of the torque modulation signal ($T_M$) as the speed decreases.

14. Motor control unit comprising a direct torque control unit according to one of the preceding claims and a converter unit (3) which is adapted to drive an electrical machine (2), wherein the processing unit (4) is adapted to provide control signals to the converter unit (3) to provide voltage space vectors to the electrical machine (2).

15. Drive system comprising a motor control unit according to claim 14 and an electrical machine (2).

16. Drive system according to claim 15, wherein the modulation unit (15) is adapted to provide the periodic torque modulation signal with a modulation frequency which is higher than a cut-off frequency of the electrical machine (2) regarding the applied control signals.

17. Direct torque control method for controlling an electrical machine (2), comprising the steps of:

- providing a difference torque signal depending on a desired torque and an actual torque of the electrical machine (2);
- providing a torque modulation signal which is applied such that the torque difference signal is overlaid by the torque modulation signal ($T_M$) to obtain a modified torque difference signal;
- applying one of a plurality of predetermined torque output levels based on a change of the modified torque difference signal input; and
- providing control signals for controlling a converter unit (3) of the electrical machine (2) depending on the applied torque output level.

18. Direct torque control method according to claim 17, wherein the torque modulation signal ($T_M$) is only applied when the speed is below a speed threshold and the load of the electrical machine is below a torque threshold.

Fig. 1

Fig. 2

Europäisches
Patentamt

European
Patent Office

Office européen
des brevets

**EUROPEAN SEARCH REPORT**

Application Number

EP 08 16 9416

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KAZMIERKOWSKI M P ET AL: "Improved torque and flux vector control of PWM inverter-fed induction motor drive" 19930101, 1 January 1993 (1993-01-01), pages 115-120, XP006511703 * pages 117-119; figure 1 * | 1-18 | INV. H02P23/00 H02P21/10 H02P21/12 |
| X | KADJOUDJ M; TAIBI S; GOLEA N; BENBOUZID H: "Modified direct torque control of permanent magnet synchronous motor drives" INTERNATIONAL JOURNAL OF SCIENCES AND TECHNIQUES OF AUTOMATIC CONTROL & COMPUTER ENGINEERING IJ-STA, vol. 1, no. 2, December 2007 (2007-12), pages 167-180, XP002533472 * page 175; figure 1 * | 1-18 | |
| X | DATABASE COMPENDEX [Online] ENGINEERING INFORMATION, INC., NEW YORK, NY, US; BEHERA R K ET AL: "Improved direct torque control of induction motor with dither injection" XP002533195 Database accession no. E20084711716794 * abstract * | 1-18 | TECHNICAL FIELDS SEARCHED (IPC) H02P |
| X | & SADHANA - ACADEMY PROCEEDINGS IN ENGINEERING SCIENCES OCTOBER 2008 INDIAN ACADEMY OF SCIENCES IN, vol. 33, no. 5, October 2008 (2008-10), pages 551-564, * pages 555-556; figure 5 * | 1-18 | |

The present search report has been drawn up for all claims

| Place of search | Date of completion of the search | Examiner |
|---|---|---|
| The Hague | 23 June 2009 | Gusia, Sorin |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)